Europäisches Patentamt

European Patent Office

Office européen des brevets

(11) Numéro de publication : **0 338 881 B1**

(12) **FASCICULE DE BREVET EUROPEEN**

(45) Date de publication du fascicule du brevet :
**19.11.92 Bulletin 92/47**

(51) Int. Cl.⁵ : **H04L 25/06, H04L 25/02, H04L 1/24**

(21) Numéro de dépôt : **89400901.8**

(22) Date de dépôt : **31.03.89**

(54) **Procédé et dispositif de reconfiguration d'un signal dans un réseau de transmission d'informations en différentiel, notamment d'un véhicule automobile.**

(30) Priorité : **21.04.88 FR 8805304**

(43) Date de publication de la demande :
**25.10.89 Bulletin 89/43**

(45) Mention de la délivrance du brevet :
**19.11.92 Bulletin 92/47**

(84) Etats contractants désignés :
**DE GB IT**

(56) Documents cités :
**E.D.N. ELECTRONIC DESIGN NEWS, vol. 27, no. 4, 17 février 1982, pages 167-176, Boston, Mass., US; A.J. WEISSBERGER: "Upgradedata communications with an RS-449 interface"**

(56) Documents cités :
**WESCON TECHNICAL PAPER, vol. 26, novembre 1983, pages 26/2-1 - 26/2-6, San Francisco, US; C. SEABORG: "The D2B - a digitaldata bus for small area networks"**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Magne Pierre**
**9, rue Camille Saint Saens**
**92400 Courbevoie (FR)**

(74) Mandataire : **Polus, Camille et al**
**c/o Cabinet Lavoix 2, Place d'Estienne d'Orves**
**F-75441 Paris Cedex 09 (FR)**

## Description

La présente invention concerne un procédé de reconfiguration d'un signal de message d'informations issu d'un comparateur différentiel d'entrée d'une station de traitement d'informations, dans un réseau de transmission d'informations, notamment de véhicule automobile, ce réseau fonctionnant en différentiel à l'aide de deux fils de transmission d'informations raccordés aux entrées du comparateur et un dispositif pour la mise en oeuvre de ce procédé.

Les systèmes de multiplexage de classe A permettent de relier des fonctions dites "organes de carrosserie" à une unité centrale qui en gère le fonctionnement.

Ces organes sont physiquement reliés entre eux par deux fils de transmission d'informations qui constituent un bus de liaison. Les signaux qui circulent sur ce bus sont créés et réceptionnés par un circuit émetteur/récepteur de ligne de station, ce circuit étant piloté par un circuit de gestion de protocole qui gère dans le temps le format des bits et des messages.

Le format des bits couramment utilisé est du type à modulation en largeur d'impulsions PWM (Pulse Width Modulation) qui permet d'identifier les bits 1 ou 0 en inspectant le rapport cyclique du signal transmis.

Le circuit émetteur/récepteur de ligne travaillant en mode différentiel, il faut normalement imposer le sens de connexion du bus pour avoir en sortie du récepteur d'une station, un signal de polarité identique à celui transmis par l'émetteur d'une autre station et ne pas avoir d'ambiguité sur le rapport cyclique transmis.

Par ailleurs, il est intéressant pour améliorer la susceptibilité aux parasites de ligne, d'utiliser une paire de conducteurs torsadés, pour former le bus, ce qui augmente encore les difficultés de repérage de la polarité des conducteurs.

Le but de l'invention est donc de résoudre ces problèmes en proposant un procédé et un dispositif qui permettent de s'affranchir complétement de ces difficultés en donnant à la station la possibilité de détecter la polarité du signal reçu en différentiel quelque soit le sens de branchement des conducteurs du bus de liaison.

A cet effet, l'invention a pour objet un procédé de reconfiguration d'un signal de message d'informations, issu d'un comparateur différentiel d'entrée d'une station de traitement d'informations dans un réseau de transmission d'informations en modulation de largeur d'impulsions, notamment de véhicule automobile, ledit réseau fonctionnant en différentiel à l'aide de deux fils de transmission d'informations raccordés aux entrées du comparateur, ledit signal ayant une période déterminée, caractérisé en ce qu'on détecte le bit de début de message, on mesure le premier niveau de signal suivant le bit de début de message, et on inverse le signal issu du comparateur avant son traitement dans le reste des circuits de la station, si le premier niveau de signal mesuré ne correspond pas à un niveau déterminé.

Selon un autre aspect, l'invention a également pour objet un dispositif pour la mise en oeuvre du procédé décrit précédemment.

L'invention sera mieux comprise à l'aide de la description qui va suivre, donnée uniquement à titre d'exemple et faite en se référant aux dessins annexés, sur lesquels :

- la Fig.1 représente un schéma synoptique de deux stations d'un réseau de transmission d'informations d'un véhicule automobile, reliées par un bus de transmission d'informations en différentiel;
- la Fig.2 représente une portion d'un exemple de message reçu par une station;
- la Fig.3 représente une portion d'un autre exemple de message reçu par une station; et
- la Fig.4 représente un schéma électrique d'un dispositif pour la mise en oeuvre d'un procédé selon l'invention.

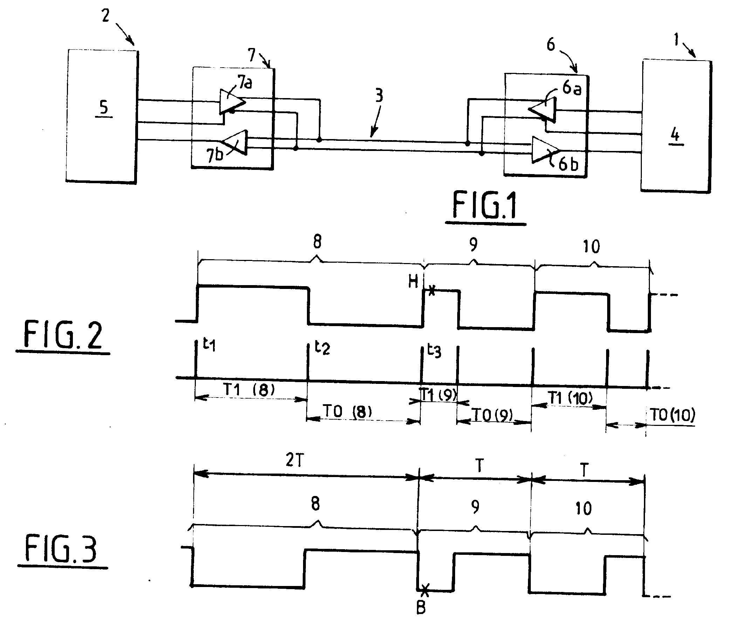

Ainsi qu'on peut le voir sur la Fig.1, les réseaux de transmission d'informations en différentiel, notamment de véhicule automobile, comportent différentes stations par exemple, 1 et 2, reliées entre elles par un bus de transmission d'informations 3, ce bus de transmission pouvant être constitué par deux fils de transmission d'informations en différentiel.

Chaque station comporte un circuit de gestion de protocole, par exemple 4 et 5 relié à un circuit émetteur/récepteur de ligne 6,7. Ce circuit émetteur/récepteur de ligne comporte des moyens d'émission de messages par exemple 6a et 7a, reliés au bus 3 et des moyens de réception de messages, par exemple 6b et 7b, ces moyens de réception pouvant être constitués par un comparateur différentiel dont les entrées sont raccordées aux deux fils de transmission d'informations constituant le bus 3.

Les circuits émetteur/récepteur de ligne travaillant en mode différentiel, il faut normalement imposer le sens de connexion du bus pour avoir en sortie des moyens de réception d'une station, un signal de polarité identique à celui transmis par les moyens d'émission d'une autre station et ne pas avoir d'ambiguité sur le rapport cyclique des signaux transmis.

En effet, et comme on peut le voir sur la Fig.2, le format de bit couramment utilisé est du type à modulation en largeur d'impulsions PWM (Pulse Width Modulation) qui permet de détecter par exemple un bit 1 ou 0 en inspectant le rapport cyclique du signal transmis.

Dans ce type de transmission, la reconnaissance des bits est basée sur deux critères à savoir d'une part leur durée par rapport à la période d'horloge T de fréquence f et d'autre part, le rapport cyclique de ceux-ci.

Dans les signaux transmis, comme dans la portion de signal représentée sur cette Fig.2, il existe trois types différents de bits à reconnaître, à savoir :

- un bit 8 de début de message (start) dont la durée est à peu près égale à deux fois la période d'horloge T avec par exemple une tolérance de 10%, le rapport cyclique typique d'un tel bit, T1(8)/T1(8) + T0(8) étant d'à peu près 50% et en tout cas compris entre 40 et 60%, de sorte que dans ce signal T1(8) = T0(8) = T et T1(8) + T0(8) = 2T.

Par ailleurs, un autre type de bit à reconnaître est un bit 0, comme le bit 9 représenté sur cette figure, dont la durée est à peu près égale à T avec une tolérance de 10%, le rapport cyclique typique T1(9)/T1(9) + T0(9) d'un tel bit étant d'à peu près 33% et tout état de cause, compris entre 20 et 40%.

Enfin, le dernier type de bit à reconnaître est un bit 1, comme le bit 10 représenté sur cette figure 2. La durée de ce bit est à peu près égale à la période d'horloge T avec une tolérance de 10% et le rapport cyclique typique T1(10)/T1(10) + T0(10) d'un tel bit étant d'à peu près 66% et en tout état de cause compris entre 60 et 80%.

Le signal représenté sur la Fig.2 est le signal de sortie du comparateur différentiel d'entrée de la station concernée, lorsque les fils de transmission d'informations constituant le bus sont raccordés correctement à la station.

Cependant, il peut arriver pour diverses raisons que ces fils soient raccordés à l'envers et on obtient alors le signal représenté sur la Fig.3, qui est exactement le signal opposé de celui de la Fig.2. Or, ceci peut présenter un certain nombre d'inconvénients dans la suite du traitement de ce signal au niveau de l'interprétation des informations transmises et notamment du rapport cyclique des différents bits, par le reste des circuits de la station.

Pour ces raisons, il est donc nécessaire de déterminer le sens de raccordement des fils de transmission d'informations et si besoin, d'assurer une reconfiguration du signal de message d'informations issu du comparateur différentiel, avant le traitement de celui-ci par le reste des circuits de la station.

Le procédé de reconfiguration du signal de message d'informations, selon l'invention, consiste à détecter le bit 8 de début de message, à mesurer le premier niveau de signal suivant le bit 8 de début de message et à inverser le signal issu du comparateur avant son traitement dans le reste des circuits de la station si le premier niveau de signal mesuré ne correspond pas à un niveau déterminé, par exemple haut. Bien entendu, le niveau déterminé peut être le niveau bas.

Sur la Fig.2, la portion de signal représentée comporte des bits présentant une configuration correcte. En effet, le bit 8 de début de message, le bit 9 identifiant un 0 et le bit 10 identifiant un 1, commencent par un niveau logique 1 pendant un temps T1, suivi pendant un temps T0 d'un niveau logique 0. Ceci est la configuration classique d'une transmission par modulation en largeur d'impulsions.

Si l'on mesure le premier niveau de signal suivant le bit 8 de début de message, c'est à dire par exemple au point H du bit 9, on relève que ce niveau est haut, de sorte que l'on en déduit que la transmission d'informations est correcte et que ce signal peut être traité directement par le reste des circuits de la station.

Par contre, dans l'exemple représenté sur la Fig.3, après la détection du bit 8 de début de message, par exemple par la détermination de sa durée et de son rapport cyclique, le premier niveau de signal mesuré suivant ce bit de début de message, est un niveau bas, par exemple 8, de sorte qu'on en déduit que la transmission et le sens de raccordement des fils du bus de transmission d'informations à la station, sont inversés et qu'il y a lieu d'inverser le signal de sortie du comparateur différentiel d'entrée de la station, avant son traitement dans le reste des circuits de cette station.

En effet, le traitement du signal tel que représenté sur la Fig.3, peut poser des problèmes d'interprétation de rapport cyclique, et donc d'identification des bits, ce qui serait préjudiciable au bon fonctionnement de la station.

La détection du bit 8 de début de message peut être réalisée par un traitement des fronts du signal.

Sur la Fig.2, ces fronts sont identifiés par les références t1, t2 et t3. On mesure donc le temps s'écoulant entre un premier front t1 et un second front t2 et le temps s'écoulant entre le second front t2 et un troisième front t3 de ce signal, on soustrait les deux temps pour obtenir une image du rapport cyclique de la portion de signal analysée et on additionne les deux temps pour obtenir une durée totale de la portion de signal analysée de manière à identifier un bit de début de message lorsque le résultat de la soustraction est à peu près égal à zéro et le résultat de l'addition est à peu près égal à deux fois la période T du signal, ces critères définissant un bit de début de message.

Si la portion de signal analysée ne correspond pas à un bit de début de message, la même analyse reprend à partir du front t2 et sur les trois derniers fronts du signal qui déterminent les deux temps à analyser.

Ainsi que cela a été mentionné précédemment, à la suite de cette détermination, a lieu la mesure du premier niveau suivant le bit de début de message et l'inversion de ce signal si nécessaire pour assurer la reconfiguration du signal avant sont traitement dans le reste des circuits de la station.

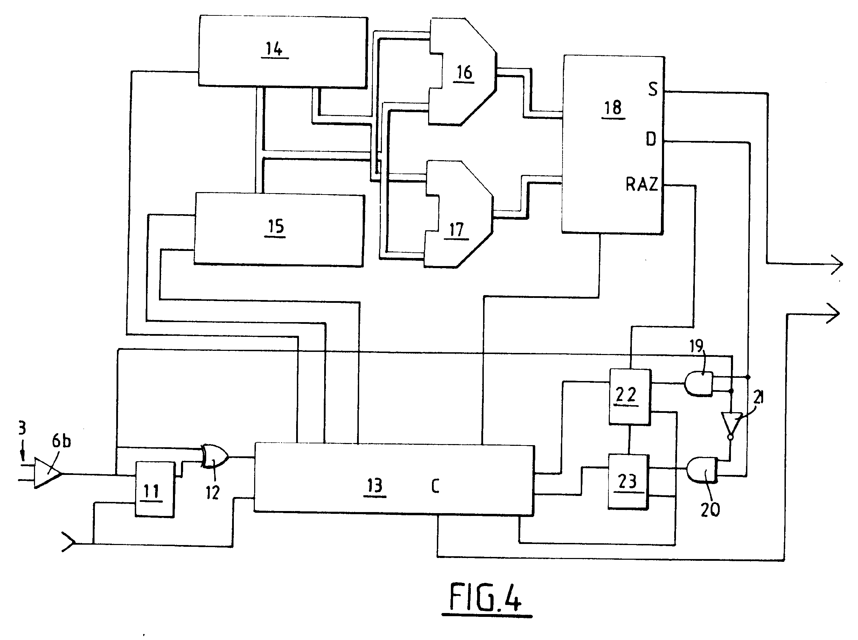

Ce procédé peut être mis en oeuvre par un dispositif tel que celui représenté sur la Fig.4, dans lequel les fils de transmission de données constituant le bus 3 sont raccordés par exemple au comparateur différentiel 6b d'entrée de la station 1 mentionnée en regard de la Fig.1.

La sortie du comparateur 6b est reliée à une entrée d'une bascule 11 dont l'autre entrée reçoit le signal d'horloge de la station. La sortie du comparateur 6b et la sortie de la bascule 11 sont également reliées aux entrées d'une porte OU EXCLUSIF 12 dont la sortie est reliée à une borne d'un séquenceur 13 de synchronisation du défilement de la succession des fronts du signal afin qu'une analyse complète des signaux puisse être effectuée. Ce séquenceur 13 reçoit également le signal d'horloge de la station.

Trois sorties de ce séquenceur 13 sont également reliées d'une part, à un registre 14 et d'autre part à un compteur 15 dont les sorties sont reliées à des moyens d'addition et à des moyens de soustraction 16 et 17, respectivement.

Les sorties de ces moyens d'addition et de soustraction 16 et 17 sont reliées à une logique 18 comprenant des moyens de détermination du bit de début de message et de décodage des informations.

Une sortie D de détection du bit de début de message de cette logique est reliée à une entrée de portes ET 19 et 20, l'autre entrée de la porte ET 19 étant reliée directement à la sortie du comparateur 6b, tandis que l'autre entrée de la porte ET 20 est reliée à cette sortie du comparateur 6b à travers un inverseur 21. Les sorties de ces portes ET 19 et 20 sont reliées à une entrée de bascules 22 et 23 recevant sur une autre entrée, un signal d'horloge provenant du séquenceur 13 et sur une autre entrée un signal de remise à zéro provenant de la sortie RAZ de la logique 18. Les sorties des bascules 22 et 23 sont reliées au séquenceur 13 de manière à indiquer à celui-ci le premier niveau de signal mesuré suivant le bit de début de message.

Le séquenceur 13 délivre par sa sortie C au reste des circuits de la station, un signal d'autorisation de prélèvement du bit en sortie de la logique 18 sur la sortie S de celle-ci.

La bascule 11 et la porte 12 assurent donc une détection des fronts du signal provenant du comparateur 6b, de manière que les moyens d'addition et de soustraction 16 et 17, par l'intermédiaire du séquenceur 13 du compteur 15 et du registre 14, puissent déterminer le bit de début de message. Une fois cette détection réalisée, le signal de détection est transmis aux portes ET 19 et 20. Ces portes assurent la commande du séquenceur 13 pour la mesure du premier niveau de signal suivant le bit de début de message, par l'intermédiaire des bascules 22 et 23, qui commande à son tour la logique 18, pour que celle-ci inverse si nécessaire le signal, de manière à obtenir un signal de sortie correct, vers le reste des circuits de la station.

Bien entendu, d'autres modes de réalisation de ce dispositif peuvent être envisagés.

**Revendications**

1. Procédé de reconfiguration d'un signal de message d'informations, issu d'un comparateur différentiel (6b) d'entrée d'une station de traitement d'informations dans un réseau de transmission d'informations en modulation de largeur d'impulsions, notamment de véhicule automobile, ledit réseau fonctionnant en différentiel à l'aide de deux fils de transmission d'informations raccordés aux entrées du comparateur (6b), ledit signal ayant une période (T) déterminée, caractérisé en ce qu'on détecte le bit de début de message (8), on mesure le premier niveau (H; B) du signal suivant le bit de début de message (8), et on inverse le signal issu du comparateur (6b) avant son traitement dans le reste des circuits de la station, si le premier niveau de signal mesuré ne correspond pas à un niveau déterminé.

2. Procédé selon la revendication 1, caractérisé en ce que le niveau déterminé est le niveau haut.

3. Procédé selon la revendication 1, caractérisé en ce que le niveau déterminé est le niveau bas.

4. Procédé selon la revendication 1,2 ou 3, caractérisé en ce que la détection du bit de début de message (8) consiste à détecter les fronts du signal issu du comparateur (6b), à mesurer le temps s'écoulant entre un premier et un second fronts (t1,t2) et le temps s'écoulant entre le second front et un troisième front (t2,t3), à soustraire les deux temps pour obtenir un image du rapport cyclique de la portion de signal analysée et à additionner les deux temps pour obtenir une durée totale de la portion de signal analysée, de manière à identifier le bit de début de message (8) lorsque le résultat de la soustraction est à peu près égal à zéro et le résultat de l'addition est à peu près égal à deux fois la période (T) du signal.

5. Dispositif pour la mise en oeuvre du procédé selon l'une quelconque des revendications précédentes, dans un réseau de transmission d'informations en modulation de largeur d'impulsions, caractérisé en ce qu'il comporte des moyens (11,12,13,14,15,16,17,18) de détection du bit (8) de début de message, des moyens de mesure (19,20,21,22,23) du premier niveau de signal (H;B) suivant le bit (8) de début de message et des moyens d'inversion (18) du signal issu du comparateur (6b) avant son traitement dans le reste des circuits de la station, si le premier niveau de signal mesuré ne correspond pas à un niveau déterminé.

6. Dispositif selon la revendication 5, caractérisé en ce qu'il comporte des moyens de détection (11,12,13) des fronts du signal, des moyens de mesure du temps s'écoulant entre le premier et le second fronts (t1,t2) et du temps s'écoulant entre le second et le troisième fronts (t2,t3), des moyens de soustraction (17) des deux temps pour obtenir une image du ressort cyclique de la portion de signal analysée et des moyens d'addition (16) des deux temps pour obtenir une durée totale de la portion de signal analysée et des moyens (18) d'identification du bit (8) de début de message lorsque le résultat de la soustraction est à peu près égal à zéro et le résultat de l'addition est à peu près égal à deux fois la période (T) du signal.

## Patentansprüche

1. Rekonfigurationsverfahren für ein Informationsmeldesignal, das von einem Eingangsdifferentialkomparator einer Informationsverarbeitungsstation in einem Informationsübertragungsnet mit Impulsbreitenmodulation, vorzugsweise von Kraftfahrzeugen, ausgegeben wird, wobei das Net im Differentialmodus mit Hilfe zweier Informationsübertragungsleitungen betrieben wird, die an die Eingänge des Komparators (6b) angeschlossen sind, und wobei das Signal eine festgesetzte Periode (T) besitzt, **dadurch gekennzeichnet**, daß
man das Meldungsanfangsbit (8) erfaßt, den ersten auf das Meldungsanfangsbit (8) folgenden Signalpegel mißt, und das vom Komparator (6b) ausgegebene Signal vor seiner Behandlung in den restlichen Schaltungen der Station invertiert, sofern der erste gemessene Signalpegel nicht einem festgesetzten Pegel entspricht.

2. Verfahren nach Anspruch 1, dadurch gekennzeichnet, daß der ermittelte Pegel der hohe Pegel ist.

3. Verfahren nach Anspruch 1, dadurch gekennzeichnet, daß der ermittelte Pegel der niedrige Pegel ist.

4. Verfahren nach Anspruch 1, 2 oder 3, dadurch gekennzeichnet, daß die Erfassung des Meldungsanfangsbits (8) aus der Erfassung der Flanken des vom Komparator (6b) ausgegebenen Signals, der Messung des Zeitablaufs zwischen einer ersten und einer zweiten Flanke (t1, t2) und des Zeitablaufs zwischen der zweiten Flanke und einer dritten Flanke (t2, t3), der Subtraktion der beiden Zeitperioden zur Gewinnung einer Vorstellung über das zyklische Verhältnis des analysierten Signalabschnittes, und der Addition der beiden Zeitperioden zur Gewinnung der Gesamtdauer des analysierten Signalabschnittes besteht, so daß das Meldungsanfangsbit (8) identifiziert werden kann, wenn das Ergebnis der Subtraktion ungefähr gleich null und das Ergebnis der Addition ungefähr dem Zweifachen der Periode (T) des Signals ist.

5. Einrichtung zur Durchführung des Verfahrens nach einem beliebigen vorhergehenden Anspruch in einem Informationsübertragungsnetz mit Impulsbreitenmodulation, dadurch gekennzeichnet, daß die Einrichtung Mittel (11, 12, 13, 14, 15, 16, 17, 18) zur Erfassung des Meldungsanfangsbits (8), Mittel zur Messung (19, 20, 21, 22, 23) des ersten, auf das Meldungsanfangsbit (8) folgenden Signalpegels (H; B) und Mittel (18) zum Invertieren des vom Komparator (6b) ausgegebenen Signals vor seiner Verarbeitung in den restlichen Schaltungen der Station aufweist, falls der gemessene erste Signalpegel nicht einem festgesetzten Niveau entspricht.

6. Einrichtung nach Anspruch 5, dadurch gekennzeichnet, daß sie Mittel (11, 12, 13) zur Erfassung der Signalflanken, Mittel zur Messung des Zeitablaufs zwischen der ersten und der zweiten Flanke (t1, t2) und des Zeitablaufs zwischen der zweiten und der dritten Flanke (t2, t3), Mittel (17) zum Subtrahieren der beiden Zeitperioden zur Gewinnung einer Vorstellung über das zyklische Verhältnis des analysierten Signalabschnittes, Mittel (16) zum Addieren der beiden Zeitperioden zur Gewinnung der Gesamtdauer des analysierten Signalabschnittes, und Mittel (18) zum Identifizieren des Meldungsanfangsbits (8) aufweist, wenn das Ergebnis der Subtraktion ungefähr gleich null ist und das Ergebnis der Addition ungefähr der doppelten Periode (T) des Signals entspricht.

## Claims

1. Process for the reconfiguration of an information message signal derived from an input differential comparator (6b) of an information processing station in an information transmission network with pulse width modulation, in particular for a motor vehicle, the said network operating in the differential mode with the aid of two information transmission wires connected to the inputs of the comparator (6b), the said signal having a predetermined period (T), characterised in that the message start bit (8) is detected, the first level (H; L) of the signal following the message start bit (8) is measured, and the signal derived from the comparator (6b) is inverted before it is processed in the rest of the circuits of the station, if the first signal level measured does not correspond to a predetermined level.

2. Process according to claim 1, characterised in that the predetermined level is the high level.

3. Process according to claim 1, characterised in that the predetermined level is the low level.

4. Process according to claim 1, 2 or 3, characterised in that the detection of the message start bit (8) consists of detecting the fronts of the signal derived from the comparator (6b), measuring the time passing between a first and a second front (t1, t2) and the time passing between the second front and a third front (t2, t3), subtracting the two times in order to obtain an image of the cyclic ratio of the analyzed signal portion and adding the two times in order to obtain a total duration of the analyzed signal portion so as to identify the message start bit (8) when the result of the subtraction is nearly equal to zero and the result of the addition is nearly equal to twice the period (T) of the signal.

5. Device for the implementation of the process according to any one of the previous claims, in an information transmission network with pulse width modulation, characterised in that it comprises means (11, 12, 13, 14, 15, 16, 17, 18) for the detection of the message start bit (8), means (19, 20, 21, 22, 23) for measuring the first signal level (H; L) following the message start bit (8) and means (18) for the inversion of the signal derived from the comparator (6b) before it is processed in the rest of the circuits of the station, if the first signal level measured does not correspond to a predetermined level.

6. Device according to claim 5, characterised in that it comprises means (11, 12, 13) for the detection of the signal fronts, means for measuring the time which passes between the first and the second fronts (t1, t2) and the time which passes between the second and the third fronts (t2, t3), means (17) for subtracting the two times in order to obtain an image of the cyclic ratio of the analyzed signal portion and means (16) for adding the two times in order to obtain a total duration of the analyzed signal portion and means (8) for identifying the message start bit (8) when the result of the subtraction is nearly equal to zero and the result of the addition is nearly equal to twice the period (T) of the signal.

FIG.1

2

5

7
7a
7b

3

6
6a
6b

1

4

EP 0 338 881 B1

8    9    10

FIG.2

H
x

t₁    t₂    t₃

T1 (8)
T0 (8)
T1 (9)
T0 (9)
T1 (10)
T0 (10)

2T    T    T

8    9    10

FIG.3

x
B

FIG.4